# EUROPEAN PATENT SPECIFICATION

(11) **EP 0 752 754 B1**
(45) Date of publication and mention of the grant of the patent: **07.11.2001**
(21) Application number: 96304869.9
(22) Date of filing: 01.07.1996
(51) Int. Cl.: H02P 6/00

(54) **Method for controlling velocity of rotary motor and apparatus therefor**
Verfahren zur Regelung der Geschwindigkeit eines Rotationsmotors und Vorrichtung dafür
Méthode pour la commande de la vitesse d'un moteur rotatif et dispositif pour sa mise en oeuvre

(30) Priority: 04.07.1995 KR 9519515
(43) Date of publication of application: 08.01.1997
(73) Proprietor: SAMSUNG ELECTRONICS CO., LTD., Suwon-city, Kyungki-do 441-373 (KR)
(72) Inventor: Seoung, Gan-soo, Seocho-gu, Seoul (KR); Kim, Young-hun, Kwanak-gu, Seoul (KR); Ha, In-jung, Kwanak-gu, Seoul (KR)
(74) Representative: Chugg, David John

(56) References cited:
- EP-A- 0 296 699
- EP-A- 0 469 151
- US-A- 4 561 400
- US-A- 4 821 168
- IEEE TRANSACTIONS ON INDUSTRY APPLICATIONS, vol. 29, no. 1, January 1993, NEW YORK US, pages 187-194, XP000358881 NOBUYUKI MATSUI ET AL: "Autocompensation of Torque Ripple of Direct Drive Motor by Torque Observer"
- PATENT ABSTRACTS OF JAPAN vol. 17, no. 646 (E-1467), 30 November 1993 & JP-A-05 207776 (TOSHIBA CORP), 13 August 1993,
- EUROPEAN POWER ELECTRONICS CHAPTER SYMPOSIUM, 19 - 20 October 1994, LAUSANNE CH, pages 379-384, XP000603852 B.S. STEVENS: "THE COMPENSATION OF TORQUE VARIATIONS"
- IROS'91, 3 - 5 November 1991, OSAKA JP, pages 647-654, XP000603848 M. GOTOU ET AL: "Development of Multirate Sampling Repetitive Learning Servo System and its Application to a Compact Camcorder"

## Description

The present invention relates to a velocity control of a rotary motor contained in a video cassette recorder (VCR), and more particularly, to a velocity method for a rotary motor and an apparatus adopting the same, in which a disturbance applied to the rotary motor is estimated and corrected to improve a velocity control characteristic.

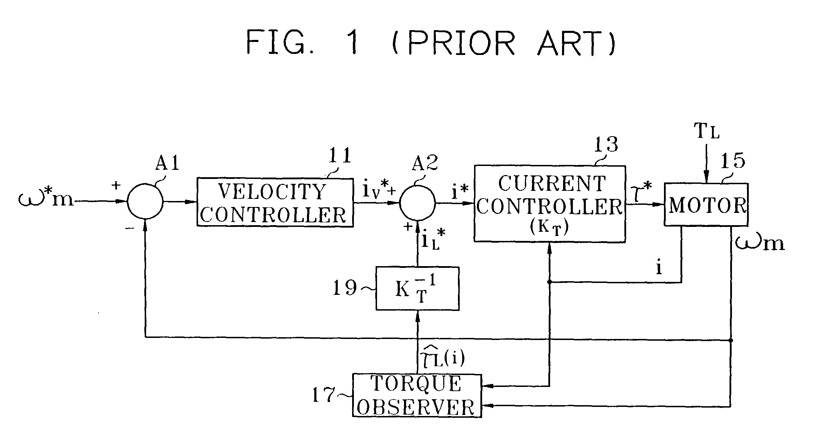

Since a disturbance exists usually in controlling a motor, an accurate motor control is not performed and a control error is generated. In this case, a VCR driven by the motor cannot perform a normal operation. Thus, such a disturbance is removed by estimating a torque of the disturbance of the motor by means of an observer. A control theory of suppressing such a load disturbance is being studied in a modern control theory. One example is shown in Figure 1.

Figure 1 is a block diagram showing a conventional velocity control apparatus of a rotary motor having a disturbance. The apparatus of Figure 1 is disclosed in a paper entitled "Autocompensation of Torque Ripple of Direct Drive Motor by Torque Observer" by Nobuyuki Matsui, Tatsuo Makino, and Hirokazu Satoh (IEEE Trans. on Industry Applications, vol. 29, No. 1, January/February 1993, pp. 187-194). In Figure 1, a first adder A1 receives a velocity command ω^{*}ₘ as a reference input and motor 15 has an output response of angular velocity ωₘ which is input to a negative input of A1 so that A1 obtains a difference ω^{*}ₘ-ωₘ. The difference ω^{*}ₘ-ωₘ is input to a velocity controller 11. The velocity controller 11 outputs a current command iᵥ^{*} to control a rotational velocity of the motor 15 according to the input difference ω^{*}ₘ-ωₘ. The current command iᵥ^{*} is input to a second adder A2. The second adder A2 adds the current command iᵥ^{*} applied from the velocity controller 11 and a disturbance removal command i_{L}^{*} and obtains a corrected current command i^{*}. Here, the disturbance removal command i_{L}^{*} is obtained by multiplying an estimation load disturbance torque τ̂_{*L*}*(i)* estimated in a torque observer 17 which receives an angular velocity ωₘ being an output response of the motor 15 and an actual current i by a transfer function K_{T}⁻¹. Here, values with the superscript ^{*} are actual values and values with the superscript ^{*} are command values. Meanwhile, the corrected current command i^{*} is input to a current controller 13. The current controller 13 expressed as the transfer function K_{T} supplies a torque command τ̂^{*} to the motor 15 in order to control a rotational velocity of the motor 15 in response to the corrected current command i^{*}. The motor 15 rotates at a speed corresponding to the torque command τ̂^{*} of the current controller 13. However, in controlling a motor, factors of regularly or irregularly varying a control quantity are generated according to peripheral conditions. Such factors are called disturbances T_{L} which chiefly bring about a difficult velocity control. Thus, a good velocity characteristic can be obtained when an effect of the disturbance is removed. The torque observer 17 which estimates the disturbance T_{L} applied to the motor 15 obtains an estimated load disturbance torque τ̂_{L}*(i)* according to the following equation (1) under the assumption that the disturbance is varied sufficiently slowly.${\hat{\text{τ}}}_{\text{L}} \text{(i) = ε(i)+L} {{\text{ω}}^{̇}}_{\text{m}} \text{(i)} \text{ε(i+1) =} \text{Â} \text{ε(i)+} \hat{\text{b}} {\text{i}}_{\text{q}} \text{(i) +} \hat{\text{K}} {\text{ω}}_{\text{m}} \text{(i)} \text{Â} {\text{=1+LT}}_{\text{s}} {\text{/J}}_{\text{n}} \text{,} \hat{\text{b}} {\text{=-LK}}_{\text{Tn}} {\text{T}}_{\text{S}} \text{/J} \hat{\text{K}} {\text{=L(L+D}}_{\text{n}} {\text{)T}}_{\text{S}} {\text{/J}}_{\text{n}}$ here, Jn, Dn and K_{Tn} are nominal values with respect to an inertial moment J, a damping factor D and a torque constant K_{T}. L which is smaller than Zero is an observer gain, ε is a random variable, τ̂_{L} is an observer output, and Tₛ is a sampling period.

The above equation (1) can be defined as the following equation (2).${\hat{\text{τ}}}_{\text{L}} \text{(S)} \text{=} \frac{\text{1}}{\text{1} \text{+} \text{ST}} {\text{τ}}_{\text{L}} \text{(S)}$

Here, τ̂_{L} is an actual load disturbance torque, τ̂_{L} is an estimated load disturbance torque and s is a Laplacian operator. In this case, T=-Tₛ/ln(1+LTₛ/Jₙ) and 1/(1+ST) plays a role of a low-pass filter. Here, values without a subscript n are actual values and values with the subscript n are nominal values which are designed to be close to the actual values.

Thus, if the actual load disturbance torque τ̂_{L} is slowly varied, it approximates the estimated load disturbance torque τ̂_{L} to completely remove the load disturbance T_{L}.

As described above, the conventional method of removing the load disturbance by estimating the load disturbance torque of the motor requires much calculation time due to the complex equations and has substantial problems to implement it into hardware. Since a bandwidth of the low-pass filter 1/(1+ST) becomes large to follow up the fast varying disturbances, the observer gain L should become large accordingly. The gain cannot be enlarged without limitation in an actual implementation, and the disturbance is estimated with respect to time. As a result, a continuous estimation operation should be performed during the operation of a closed loop with respect to the velocity control of the rotary motor, which results in much calculation.

EP 296699 (Matsushita) discloses an iterative learning control system with a detecting block for obtaining a detected signal corresponding to a controlled variable of a controlled system, and a controlling block for supplying the controlled system with a controlled signal according to the detected signal. The controlling block includes an error signal producing block for producing an error signal from the detected signal at intervals of a detecting period of time, a memorizing block for storing a plurality of memorized values corresponding to the error signal, and a control signal producing block for producing the control signal by mixing the error signal with one or more of the memorized values. The memorizing block renews the memorized values sequentially and periodically at intervals of a renewing cycle period of time proportional to the detecting period, each with a mixed value computed from the error signal and one or more of the memorized values having been renewed at intervals of L renewing cycle periods. The controlling block also includes an operation selecting block for selecting a control operation, and a position detecting block for detecting a physical movement of the controlled system. The position detecting block obtains a stored position of the memorized value corresponding to a physical position of the controlled system so as to utilize the memorized values promptly and correctly when the operation selecting block selects the control operation using the memorizing block.

US 4821168 (Matsushita) also discloses an iterative learning control system with a detector for obtaining a detected signal corresponding to a controlled variable of a controlled system and a controller for supplying the controlled system with a control signal corresponding to the detected signal. The controller includes an error circuit for producing an error signal corresponding to the detected signal, a storage circuit having a plurality of stored values corresponding to the error signal, and an output circuit for producing the control signal by mixing the error signal and one or more stored values of the storage circuit. The storage circuit renews the stored value sequentially and periodically with a value corresponding to a mixed valued of the error signal and a set of N stored values, the N stored values having been renewed at intervals of L renewing cycle periods.

It is an aim of preferred embodiments of the present invention to provide a velocity control method for a rotary motor, which stores values for compensating an effect of a disturbance expressed as a function of an angular velocity and an angular position via a learning process and compensating the disturbance using the stored values.

It is another aim to provide a velocity control apparatus for a rotary motor, which implements a velocity control method for a rotary motor by estimating and compensating a disturbance via a repetitive learning control method.

According to a first aspect of the invention, there is provided a velocity control apparatus for a rotary motor, the velocity control apparatus comprising:
velocity measuring means for obtaining a velocity error by comparing an input reference velocity with an actual velocity detected from the motor;
a velocity controller for receiving the velocity error and outputting a current command for controlling the rotational velocity of the motor;
a learning compensator for receiving the input reference velocity and the current command output from the velocity controller and the angular position and for correcting an effect of the disturbance expressed as a function of an angular position and an angular velocity applied to the motor via a repetitive learning; current command compensating means for obtaining a corrected current command by adding the current command output from the velocity controller and the disturbance correction value obtained in the learning compensator; and a current controller for receiving the corrected current command and outputting a torque command to the motor, the apparatus being characterised in that said learning compensator outputs the disturbance correction value based on the following equation,${\text{i}}^{\text{*}} {}_{\text{LK}} {\text{(t)=i}}^{\text{*}} {}_{\text{L(K-1)}} {\text{(t)+mZ}}_{\text{(K-1)}} \text{(t)}$ wherein, i^{*}_{LK} is the disturbance correction value obtained in the K-th repetitive learning and becomes the output of the learning compensator (27), i^{*}_{L(K-1)} is the disturbance correction value obtained in the (K-1)-th repetitive learning, m is the repetitive learning gain and M<1, Z_{(K-1)} is one periodic value of the current command which is a periodic function output from the velocity controller in the (K-1)-th repetitive learning.

Preferably, said learning compensator produces a periodic current command with respect to the periodic disturbance using the current command output from said velocity controller when the velocity control is in the normal state, and obtains a current disturbance correction value using one periodic value of the periodic current command and the disturbance correction value obtained on the previous learning.

Said learning compensator preferably compares the current command output from said velocity controller with a predetermined threshold value and judges whether sufficient compensation is performed with respect to the disturbance applied to the motor, and if it is judged that sufficient compensation has been accomplished, the disturbance correction value is stored and the following disturbance correction is performed using the stored disturbance correction value in the following velocity control.

Said learning compensator may obtain a new disturbance correction value via repetitive learning if it is judged that sufficient compensation has not been performed with respect to the disturbance applied to the motor.

Said learning compensator preferably receives the input reference velocity and the angular position of the motor as addresses, and outputs the disturbance correction value stored in a position assigned by the addresses.

According to a second aspect of the ivnention, there is provided a velocity control method for a rotary motor, the velocity control method comprising the steps of:
(a) obtaining a velocity error by comparing an input reference velocity with an actual velocity detected from the motor;
(b) receiving the velocity error and outputting a current command for controlling the rotational velocity of the motor;
(c) receiving the input reference velocity, the current command and the angular position and outputting a disturbance correction value for correcting an effect of the disturbance expressed as a function of an angular position and an angular velocity applied to the motor via a repetitive learning;
(d) obtaining a corrected current command by adding the current command and the disturbance correction value;
(e) receiving the corrected current command and outputting a torque command to the motor; and
(f) detecting a present velocity of the rotating motor according to the torque command, the method being characterised in that the learning compensator outputs the apparatus being characterised in that said learning compensator outputs the disturbance correction value based on the following equation,${\text{i}}^{\text{*}} {}_{\text{LK}} {\text{(t)=i}}^{\text{*}} {}_{\text{L(K-1)}} {\text{(t)+mZ}}_{\text{(K-1)}} \text{(t)}$ wherein, i^{*}_{LK} is the disturbance correction value obtained in the K-th repetitive learning and becomes the output of the learning compensator (27), i^{*}_{L(K-1)} is the disturbance correction value obtained in the (K-1)-th repetitive learning, m is the repetitive learning gain and M<1, Z_{(K-1)} is one periodic value of the current command which is a periodic function output from the velocity controller in the (K-1)-th repetitive learning.

Said learning compensation step (c) may comprise the sub-steps of:
(c1)initializing the repetitive learning time into zero and the disturbance correction value into zero at the start of learning;
(c2)producing a periodic current command using the current command with respect to the disturbance which is a periodic function expressed as only an angular position with the constant angular velocity if the velocity control becomes the normal state via the step (b);
(c3)storing one period of the periodic current command;
(c4)increasing the repetitive learning times by one;
(c5)obtaining the current disturbance correction value according to the repetitive learning by adding the one periodic value of the periodic current command to the disturbance correction value obtained in the previous repetitive learning;
(c6)judging whether the disturbance is sufficiently compensated by comparing the current command in the step (b) with a predetermined threshold value at the time of correcting the disturbance applied to the motor with the obtained disturbance correction value;
(c7)storing the disturbance correction value if it is judged that the disturbance has been sufficiently compensated in the sub-step (c6); and
(c8)if the disturbance has not been sufficiently compensated in the step (c6), repeating the repetitive learning until the disturbance will be sufficiently compensated to thereby obtain the disturbance correction value.

Said learning compensation step (c) preferably corrects the disturbance using the stored disturbance correction value.

For a better understanding of the invention, and to show how embodiments of the same may be carried into effect, reference will now be made, by way of example, to the accompanying diagrammatic drawings, in which:
Figure 1 is a block diagram of a conventional velocity control apparatus for a rotary motor having a disturbance;
Figure 2 is a block diagram of a velocity control apparatus for a rotary motor having a disturbance according to an embodiment of the present invention; and
Figure 3 is a flowchart diagram for explaining the operation of the learning compensator in a velocity control apparatus of Figure 2.

A preferred embodiment of the present invention will be described below in more detail with reference to the accompanying drawings.

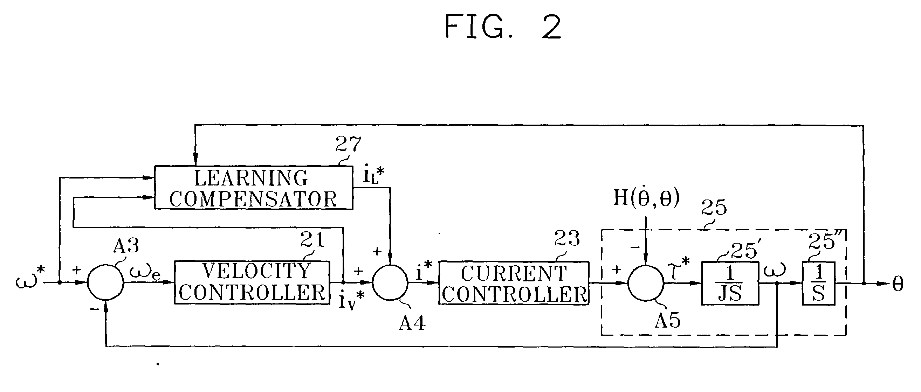

The Figure 2 apparatus is similar to the Figure 1 apparatus in view of the structure and operation thereof. In Figure 2, a learning compensator 27 is used instead of a torque observer. The learning compensator 27 receives a velocity command ω^{*}, the output of a velocity controller 21 and an angular position θ to produce an output i_{L}^{*} for correcting an effect of the disturbance.

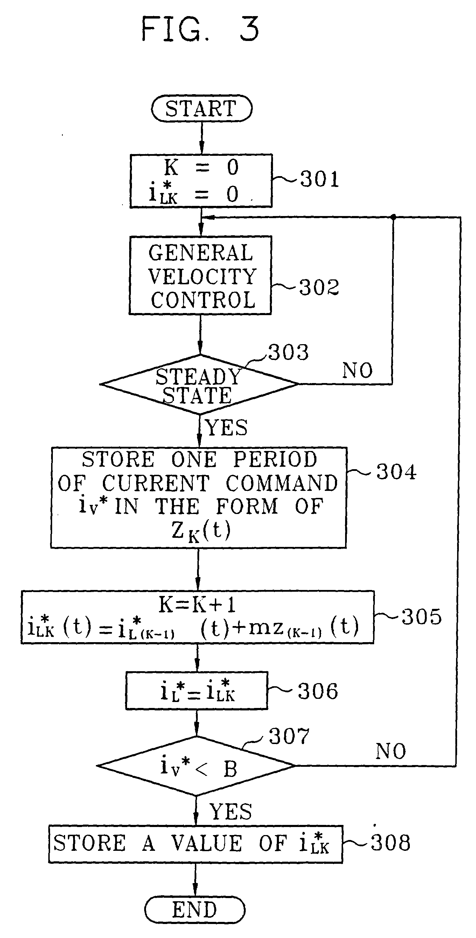

The operation of the velocity control apparatus for a rotary motor according to the present invention will be described below with reference to Figure 3.

Figure 3 is a flowchart diagram for explaining the operation of the learning compensator 27 in a velocity control apparatus of Figure 2.

A first adder A3 compares a current velocity ω detected from a motor 25 with an input reference velocity ω^{*} and obtains a velocity error ωₑ. The velocity error ωₑ is input to a velocity controller 21. The velocity error controller 11 has the following equation (3) between the torque and the velocity with respect to the motor 25.$\text{J} \frac{\text{dω}}{\text{dt}} \text{+} {\text{T}}_{\text{L}} \text{=} \text{T} \text{=} {\text{K}}_{\text{T}} \text{i}$

Here, J is an inertial moment, ω is the number of the rotation, T_{L} is a torque of a load, T is an input torque, K_{T} is a torque constant, and i is a current of a coil.

If a load torque T_{L} is zero, the motor has no load disturbance. Thus, an excellent velocity control characteristic can be obtained using a general velocity controller. If there is a load torque T_{L}, the velocity control characteristic is lowered. In this invention, a learning compensator 27 has been proposed in which an effect of the disturbance H(θ̇,θ) with respect to a load disturbance torque T_{L}(H(θ̇,θ)) expressed as a function of an angular position θ and an angular velocity θ̇ is removed via a repetitive learning. The learning compensator 27 receives the output iᵥ^{*} of the velocity controller 27, the velocity command ω^{*} and the angular position θ̇ and produces the output i_{L}^{*} for removing an effect of the disturbance H(θ̇,θ). Here, the output i_{L}^{*} is a periodic function having a period T of 2 π/ω^{*} with respect to the velocity command ω^{*} and the time, and is defined as the following equation (4). In case of constant velocity control, θ=ω^{*}t.${\text{i}}_{\text{L(K)}} {\text{(ω}}^{\text{*}} {\text{,θ) = i}}_{\text{L(K-1)}} {\text{(ω}}^{\text{*}} {\text{,θ) +mZ}}_{\text{(K-1)}} \text{(θ)}$

Here, m<Kp, and Kp is a gain p of a velocity controller. Also, m is a repetitive learning gain, Z₍ₖ₋₁₎ is obtained by sampling an output of the velocity controller at normal state for a period T.

The above-defined periodic function represents convergence to a value for removing the disturbance H(θ̇,θ), In the result of simulation, the disturbance H(θ̇,θ) is removed from the output i_{L}^{*} of the learning compensator 27 via a few times of repetitive learning. The operation of the learning compensator 27 will be described in more detail with reference to Figure 3.

In Figure 3 if compensation starts, the learning compensator 27 initializes the number K of the repetitive learning into zero at the start, and the output I_{L}^{*} which is a disturbance correction value into zero, that is, K=0 and i_{L}^{*}=0 (step 301). Then, a general motor velocity control is performed only according to an existing velocity control loop (step 302). The general velocity control is performed until a velocity becomes a normal state (step 303). If the velocity of the motor being a control object becomes a normal state (step 303) via the velocity control step 302, the learning compensator 27 produces the current command iᵥ^{*} applied from the velocity controller 21 with respect to the periodic disturbance into a periodic current command, since it is a periodic function which is expressed as a constant angular velocity θ̇ and a disturbance H(θ̇,θ) expressed as only the angular position θ (step 304). Also, one period of the periodic current command iᵥ^{*} is stored in the form of Z_{K}, that is, (Z_{K}(t), tε[0,T]) (step 304). Then, the learning compensator 27 increases the repetitive learning times K by one, that is, K=K+1 and produces an output for correcting an effect of the disturbance by the following equation (5) (step 305).${\text{i}}^{\text{*}} {}_{\text{LK}} {\text{(t) = i}}^{\text{*}} {}_{\text{L(K-1)}} {\text{(t)+mZ}}_{\text{(k-1)}} \text{(t)}$

That is, the disturbance correction value i^{*}_{LK} is obtained by the repetitive learning by adding a value by multiplying one periodic value Z₍ₖ₋₁₎ of the periodic current command stored via step 304 by the repetitive learning gain m, to the disturbance correction value i^{*}_{L(K-1)} obtained in the previous repetitive learning. The learning compensator 27 takes the output i^{*}_{LK} of the above equation (5) as a final output i^{*}_{L} and outputs the final output to a second adder A4, that is i^{*}_{L}=i^{*}_{LK} (step 306).

In Figure 2, the second adder A4 adds the current command iᵥ^{*} applied from the velocity controller 21 and the disturbance correction command i_{L}^{*} to output the corrected current command i^{*}. The current command i^{*} is input to the current controller 23. The current controller 23 outputs a torque command to the motor 25 in response to the input current command i^{*}. A third adder A5 in the motor 25 subtracts the applied disturbance from the torque command applied from the current controller 23, to output a corrected torque command τ^{*}. The velocity of the motor 25' expressed as a transfer function 1/JS is controlled according to the torque command τ^{*}. The angular velocity ω output from the motor 25 in the result of the velocity control is fedback to the first adder A3. A velocity error ωₑ is obtained by subtracting the angular velocity ω from the input velocity command ω^{*}. The velocity error ωₑ is input to the velocity controller 21. The velocity controller 21 outputs the current command iᵥ^{*} for controlling the rotational velocity of the motor 25 according to the input velocity error ωₑ. The current iᵥ^{*} is input to the learning compensator 27. The angular velocity ω is output as the angular position θ via the motor 25" expressed as a transfer function of 1/S, and is fedback to the learning compensator 27.

Returning to Figure 3, the learning compensator 27 which stores the disturbance compensation value obtained by the K-th learning compares the current command iᵥ^{*} input from the velocity controller 21 with a predetermined threshold value B, and judges whether the disturbance applied to the motor 25 is sufficiently compensated (step 307). In the disturbance compensation judgement step 307, if the current command iᵥ^{*} input from the velocity controller 21 is smaller than the predetermined threshold value B, that is, iᵥ^{*}<B, the learning compensator 27 returns step 302 to perform a general velocity control until it becomes a normal state. If it becomes the normal state, the learning compensator 27 repetitively performs processes of storing a value of the one period with respect to the output iᵥ^{*} of the velocity controller 21 and compensating the disturbance of the motor.

The learning compensator 27 recognises that sufficient compensation is performed if the current command iᵥ^{*} input from the velocity controller 21 is smaller than the predetermined threshold value B, and stores a periodic function iᵥ^{*} with respect to time as a final fixed correction value with respect to the disturbance (step 308). Then, the learning compensator 27 receives the input reference velocity ω^{*} and the angular position θ, and outputs the disturbance correction value stored in a position assigned by the addresses of a corresponding angle.As a result, the velocity control is performed by simply adding the prestored correction value in the learning compensator 27 to the output iᵥ^{*} of the velocity controller 21, to thereby enable an efficient velocity control.

As described above, the velocity control method for a rotary motor and the apparatus thereof according to the present invention stores predetermined correction values for correcting an effect of the disturbance, and performs a velocity control using the stored predetermined correction values. Accordingly, a simple and efficient velocity control can be performed.

## Claims

1. A velocity control apparatus for a rotary motor, the velocity control apparatus comprising:
velocity measuring means (A3) for obtaining a velocity error by comparing an input reference velocity with an actual velocity detected from the motor;
a velocity controller (21) for receiving the velocity error and outputting a current command for controlling the rotational velocity of the motor;
a learning compensator (27) for receiving the input reference velocity and the current command output from the velocity controller and the angular position and for correcting an effect of the disturbance expressed as a function of an angular position and an angular velocity applied to the motor via a repetitive learning;
current command compensating means (A4) for obtaining a corrected current command by adding the current command output from the velocity controller (21) and the disturbance correction value obtained in the learning compensator (27); and
a current controller (23) for receiving the corrected current command and outputting a torque command to the motor, the apparatus being **characterised in that** said learning compensator (27) output the disturbance correction value based on the following equation,${\text{i}}^{\text{*}} {}_{\text{LK}} {\text{(t) = i}}^{\text{*}} {}_{\text{L(K-1)}} {\text{(t) +mZ}}_{\text{(K-1)}} \text{(t)}$
wherein, i^{*}_{LK} is the disturbance correction value obtained in the K-th repetitive learning and becomes the output of the learning compensator (27), i^{*}_{L(K-1)} is the disturbance correction value obtained in the (K-1)-th repetitive learning, m is the repetitive learning gain and M<1, Z_{(K-1)} is one periodic value of the current command which is a periodic function output from the velocity controller in the (K-1)-th repetitive learning.

2. The velocity control apparatus for a rotary motor according to claim 1, wherein said learning compensator (27) produces a periodic current command with respect to the periodic disturbance using the current command output from said velocity controller (21) when the velocity control is in the normal state, and obtains a current disturbance correction value using one periodic value of the periodic current command and the disturbance correction value obtained on the previous learning.

3. The velocity control apparatus for a rotary motor according to claim 1 or 2, wherein said learning compensator (27) compares the current command output from said velocity controller (21) with a predetermined threshold value and judges whether sufficient compensation is performed with respect to the disturbance applied to the motor, and if it is judged that sufficient compensation has been accomplished, the disturbance correction value is stored and the following disturbance correction is performed using the stored disturbance correction value in the following velocity control.

4. The velocity control apparatus for a rotary motor according to claim 3, wherein said learning compensator (27) obtains a new disturbance correction value via repetitive learning if it is judged that sufficient compensation has not been performed with respect to the disturbance applied to the motor.

5. The velocity control apparatus for a rotary motor according to claim 3, wherein said learning compensator (27) receives the input reference velocity and the angular position of the motor as addresses, and outputs the disturbance correction value stored in a position assigned by the addresses.

6. A velocity control method for a rotary motor, the velocity control method comprising the steps of:
(a) obtaining a velocity error by comparing an input reference velocity with an actual velocity detected from the motor;
(b) receiving the velocity error and outputting a current command for controlling the rotational velocity of the motor;
(c) receiving the input reference velocity, the current command and the angular position and outputting a disturbance correction value for correcting an effect of the disturbance expressed as a function of an angular position and an angular velocity applied to the motor via a repetitive learning;
(d) obtaining a corrected current command by adding the current command and the disturbance correction value;
(e) receiving the corrected current command and outputting a torque command to the motor; and
(f) detecting a present velocity of the rotating motor according to the torque command, the method being **characterised in that** the learning compensator output the apparatus being **characterised in that** said learning compensator outputs the disturbance correction value based on the following equation,${\text{i}}^{\text{*}} {}_{\text{LK}} {\text{(t)=i}}^{\text{*}} {}_{\text{L(K-1)}} {\text{(t)+mZ}}_{\text{(K-1)}} \text{(t)}$ wherein, i^{*}_{LK} is the disturbance correction value obtained in the K-th repetitive learning and becomes the output of the learning compensator (27), i^{*}_{L(K-1)} is the disturbance correction value obtained in the (K-1)-th repetitive learning, m is the repetitive learning gain and M<1, Z_{(K-1)} is one periodic value of the current command which is a periodic function output from the velocity controller in the (K-1)-th repetitive learning.

7. The velocity control method for a rotary motor according to claim 6, wherein said learning compensation step (c) comprises the sub-steps of:
(c1) initializing the repetitive learning time into zero and the disturbance correction value into zero at the start of learning;
(c2) producing a periodic current command using the current command with respect to the disturbance which is a periodic function expressed as only an angular position with the constant angular velocity if the velocity control becomes the normal state via the step (b);
(c3) storing one period of the periodic current command;
(c4) increasing the repetitive learning times by one;
(c5) obtaining the current disturbance correction value according to the repetitive learning by adding the one periodic value of the periodic current command to the disturbance correction value obtained in the previous repetitive learning;
(c6) judging whether the disturbance is sufficiently compensated by comparing the current command in the step (b) with a predetermined threshold value at the time of correcting the disturbance applied to the motor with the obtained disturbance correction value;
(c7) storing the disturbance correction value if it is judged that the disturbance has been sufficiently compensated in the sub-step (c6); and
(c8) if the disturbance has not been sufficiently compensated in the step (c6), repeating the repetitive learning until the disturbance will be sufficiently compensated to thereby obtain the disturbance correction value.

8. The velocity control method for a rotary motor according to claim 7, wherein said learning compensation step (c) corrects the disturbance using the stored disturbance correction value.

## Patentansprüche

1. Vorrichtung zum Regeln der Geschwindigkeit für einen Rotationsmotor, wobei die Vorrichtung zum Regeln der Geschwindigkeit umfasst:
eine Geschwindigkeitsmesseinrichtung (A3), die einen Geschwindigkeitsfehler bestimmt, indem sie eine Eingangs-Bezugsgeschwindigkeit mit einer Ist-Geschwindigkeit vergleicht, die vom Motor her erfasst wird;
einen Geschwindigkeitsregler (21), der den Geschwindigkeitsfehler empfängt und einen Strom-Befehl zum Regeln der Rotationsgeschwindigkeit des Motors ausgibt;
einen selbstlernenden Kompensator (27), der die Eingangs-Bezugsgeschwindigkeit und den von dem Geschwindigkeitsregler ausgegebenen Strom-Befehl sowie die Winkelposition empfängt und eine Auswirkung der Störgröße, die als eine Funktion einer Winkelposition und einer Winkelgeschwindigkeit ausgedrückt wird und auf den Motor wirkt, über wiederholtes Lemen korrigiert;
eine Strom-Befehl-Kompensationseinrichtung (A4), die einen korrigierten Strom-Befehl bestimmt, indem sie den von dem Geschwindigkeitsregler (21) ausgegebenen Strom-Befehl und den Störgrößen-Korrekturwert, der in dem selbstlernenden Kompensator (27) bestimmt wird, addiert; und
einen Stromregler (23), der den korrigierten Strom-Befehl empfängt und einen Drehmoment-Befehl an den Motor ausgibt, wobei die Vorrichtung **dadurch gekennzeichnet ist, dass** der selbstlernende Kompensator (27) den Störgrößen-Korrekturwert auf der Grundlage der folgenden Gleichung ausgibt:${\text{i'}}_{\text{ix}} {\text{(t)=i'}}_{\text{L(K-1)}} {\text{(t)+mz}}_{\text{(K-1)}} \text{(t)}$ wobei i'_{LK} der Störgrößen-Korrekturwert ist, der beim K-ten wiederholten Lernen bestimmt wird und zum Ausgang des selbstlernenden Kompensators (27) wird, i'_{L(K-1)} der Störgrößen-Korrekturwert ist, der beim (K-1)-ten wiederholten Lernen bestimmt wird, m der Gewinn des wiederholten Lernens ist, wobei gilt M<1, Z_{(K-1)} ein periodischer Wert des Strom-Befehls ist, der eine periodische Funktion ist, die von dem Geschwindigkeitsregler beim (K-1)-ten wiederholten Lernen ausgegeben wird.

2. Vorrichtung zum Regeln der Geschwindigkeit für einen Rotationsmotor nach Anspruch 1, wobei der selbstlernende Kompensator (27) einen periodischen Strom-Befehl bezüglich der periodischen Störgröße unter Verwendung des von dem Geschwindigkeitsregler (21) ausgegebenen Strom-Befehls erzeugt, wenn sich die Geschwindigkeitsreglung im Normalzustand befindet, und einen Strom-Störgrößen-Korrekturwert unter Verwendung eines periodischen Wertes des periodischen Strom-Befehls und des Störgrößen-Korrekturwertes bestimmt, der beim vorangegangenen Lernen bestimmt wurde.

3. Vorrichtung zum Regeln der Geschwindigkeit für einen Rotationsmotor nach Anspruch 1 oder 2, wobei der selbstlernende Kompensator (27) den von dem Geschwindigkeitsregler (21) ausgegebenen Strom-Befehl mit einem vorgegebenen Schwellenwert vergleicht und feststellt, ob ausreichende Kompensation bezüglich der auf den Motor wirkenden Störgröße ausgeführt wird, und, wenn festgestellt wird, dass ausreichende Kompensation erreicht worden ist, der Störgrößen-Korrekturwert gespeichert wird und die folgende Störgrößen-Korrektur unter Verwendung des gespeicherten Störgrößen-Korrekturwertes bei der folgenden Geschwindigkeitsreglung ausgeführt wird.

4. Vorrichtung zum Regeln der Geschwindigkeit für einen Rotationsmotor nach Anspruch 3, wobei der selbstlernende Kompensator (27) einen neuen Störgrößen-Korrekturwert über wiederholtes Lernen bestimmt, wenn festgestellt wird, dass keine ausreichende Kompensation bezüglich der auf den Motor wirkenden Störgröße ausgeführt worden ist.

5. Vorrichtung zum Regeln der Geschwindigkeit für einen Rotationsmotor nach Anspruch 3, wobei der selbstlernende Kompensator (27) die Eingangs-Bezuggeschwindigkeit und die Winkelposition des Motors als Adressen empfängt und den Störgrößen-Korrekturwert ausgibt, der an einer Position gespeichert ist, die durch die Adressen zugeordnet ist.

6. Verfahren zum Regeln der Geschwindigkeit für einen Rotationsmotor, wobei das Verfahren zum Regeln der Geschwindigkeit die folgenden Schritte umfasst:
(a) Bestimmen eines Geschwindigkeitsfehlers durch Vergleichen einer Eingangs-Bezugsgeschwindigkeit mit einer Ist-Geschwindigkeit, die von dem Motor her erfasst wird;
(b) Empfangen des Geschwindigkeitsfehlers und Ausgeben eines Strom-Befehls zum Regeln der Rotationsgeschwindigkeit des Motors;
(c) Empfangen der Eingangs-Bezugsgeschwindigkeit, des Strom-Befehls sowie der Winkelposition und Ausgeben eines Störgrößen-Korrekturwertes zum Korrigieren einer Auswirkung der Störgröße, die als eine Funktion einer Winkelposition und einer Winkelgeschwindigkeit ausgedrückt wird und auf den Motor wirkt, über wiederholtes Lernen;
(d) Bestimmen eines korrigierten Strom-Befehls durch Addieren des Strom-Befehls und des Störgrößen-Korrekturwertes;
(e) Empfangen des korrigierten Strom-Befehls und Ausgeben eines Drehmoment-Befehls an den Motor und
(f) Erfassen einer momentanen Geschwindigkeit des Rotationsmotors entsprechend dem Drehmoment-Befehl, wobei das Verfahren **dadurch gekennzeichnet ist, dass** der selbstlernende Kompensator den Störgrößen-Korrekturwert auf der Grundlage der folgenden Gleichung ausgibt:${\text{i'}}_{\text{LK}} {\text{(t)=i'}}_{\text{L(K-1)}} {\text{(t)+mZ}}_{\text{(K-1)}} \text{(t)}$ wobei i'_{LK} der Störgrößen-Korrekturwert ist, der beim K-ten wiederholten Lernen bestimmt wird und zum Ausgang des selbstlernenden Kompensators (27) wird, i'_{L(K-1)} der Störgrößen-Korrekturwert ist, der beim (K-1)-ten wiederholten Lemen bestimmt wird, m der Gewinn des wiederholten Lernens ist, wobei gilt M<1 gilt, Z_{(K-1)} ein periodischer Wert des Strom-Befehls ist, der eine periodische Funktion ist, die von dem Geschwindigkeitsregler beim (K-1)-ten wiederholten Lemen ausgegeben wird.

7. Verfahren zum Regeln der Geschwindigkeit für einen Rotationsmotor nach Anspruch 6, wobei der Schritt des selbstlernenden Kompensierens (c) die folgenden Teilschritte umfasst:
(c1) Initialisieren der Zeit zum wiederholten Lernen auf Null und des Störgrößen-Korrekturwertes auf Null zum Beginn des Lernens;
(c2) Erzeugen eines periodischen Strom-Befehls unter Verwendung des Strom-Befehls bezüglich der Störgröße, die eine periodische Funktion ist, die lediglich als eine Winkelposition bei der konstanten Winkelgeschwindigkeit ausgedrückt wird, wenn die Geschwindigkeitsregelung über den Schritt (b) in den normalen Zustand übergeht;
(c3) Speichern einer Periode des periodischen Strom-Befehls;
(c4) Vermehren der wiederholten Lernvorgänge um einen;
(c5) Bestimmen des Strom-Störgrößen-Korrekturwertes entsprechend dem wiederholten Lernen durch Addieren des einen periodischen Wertes des periodischen Strom-Befehls zum dem Störgrößen-Korrekturwert, der beim vorangegangenen wiederholten Lernen bestimmt wurde;
(c6) Feststellen, ob die Störgröße ausreichend kompensiert wird, indem der Strom-Befehl in dem Schritt (b) zum Zeitpunkt des Korrigierens der auf den Motor wirkenden Störgröße mit dem bestimmten Störgrößen-Korrekturwert mit einem vorgegebenen Schwellenwert verglichen wird;
(c7) Speichern des Störgrößen-Korrekturwertes, wenn festgestellt wird, dass die Störgröße in dem Teilschritt (c6) ausreichend kompensiert worden ist; und
(c8) Wiederholen des wiederholten Lemens, wenn die Störgröße in dem Schritt (c6) nicht ausreichend kompensiert worden ist, bis die Störgröße ausreichend kompensiert wird, um so den Störgrößen-Korrekturwert zu bestimmen.

8. Verfahren zum Regeln der Geschwindigkeit für einen Rotationsmotor nach Anspruch 7, wobei in dem Schritt des selbstlernenden Kompensierens (c) die Störgröße unter Verwendung des gespeicherten Störgrößen-Korrekturwertes korrigiert wird.

## Revendications

1. Dispositif de commande de vitesse pour un moteur rotatif, le dispositif de commande de vitesse comprenant :
des moyens de mesure de vitesse (A3) pour obtenir une erreur de vitesse par comparaison d'une vitesse de référence d'entrée a une vitesse réelle détectée à partir du moteur;
un dispositif de commande de vitesse (21) pour recevoir l'erreur de vitesse et délivrer une commande de courant pour commander la vitesse de rotation du moteur;
un compensateur d'apprentissage (27) pour recevoir la vitesse de référence d'entrée et la sortie de commande de courant de la part du dispositif de commande de vitesse et la position angulaire et pour corriger un effet de la perturbation exprimée en fonction d'une position angulaire et d'une vitesse angulaire appliquée au moteur par l'intermédiaire d'un apprentissage répétitif;
des moyens de compensation de commande de courant (A4) pour obtenir une commande de courant corrigée par addition du signal de sortie de commande de courant fourni par le dispositif de commanda de vitesse (24) et la valeur de correction de perturbation obtenue dans le compensateur d'apprentissage (27); et
un dispositif de commande de courant (23) pour recevoir la commande de courant corrigée et délivrer une commande de couple au moteur, le dispositif étant **caractérisé en ce que** le compensateur d'apprentissage (27) délivre la valeur de correction de perturbation sur la base de l'équation suivante${\text{i*}}_{\text{LK}} {\text{(t) = i*}}_{\text{L(K-1)}} {\text{(t) +mZ}}_{\text{(K-1)}} \text{(t)}$ dans laquelle i*_{LK} est la valeur de correction de perturbation obtenue lors du K-ème apprentissage répétitif et devient le signal de sortie du compensateur d'apprentissage (27), i*_{L(K-1)} est la valeur de correction de perturbation obtenue lors du (K-1)-éme apprentissage répétitif, m est le gain d'apprentissage répétitif et M<1, Z_{(K-1)} est une valeur périodique de la commande de courant, qui est une fonction périodique délivrée par le diapoaitii de commande de vitesse dans le (K-1)-éme apprentissage répétitif.

2. Dispositif de commande de vitesse pour un moteur rotatif selon la revendication 1, dans lequel ledit compensateur d'apprentissage (27) produit une commande de courant périodique en rapport avec la perturbation périodique en utilisant la commande de courant délivrée par ledit dispositif de commande de vitesse (21) lorsque la commande de vitesse est dans l'état normal, et obtient une valeur de correction de perturbation de courant moyennant l'utilisation d'une valeur périodique de la commande de courant périodique et de la valeur de correction de perturbation obtenue lors de l'apprentissage precédent.

3. Dispositif de commande de vitesse pour un moteur rotatif selon la revendication 1 ou 2, dans lequel ledit compensateur d'apprentissage (27) compare le signal de sortie de commande de courant délivré par ledit dispositif de commande de vitesse (21) à une valeur de seuil prédéterminée et évalue si une compensation suffisante est effectuée par rapport à la perturbation appliquée au moteur et, s'il est établi qu'une compensation suffisante a été réalisée, la valeur de correction de perturbation est mémorisée et la correction de perturbation suivante est exécutée moyennant l'utilisation de la valeur de correction de perturbation mémorisée, dans la commande de vitesse suivante.

4. Dispositif de commande de vitesse pour un moteur rotatif selon la revendication 3, dans lequel ledit compensateur d"apprentissage (27) détermine une nouvelle valeur de correction de perturbation par l'intermédiaire de l'apprentissage répétitif s'il est évalué qu'une compensation suffisante n'a pas été effectuée en rapport avec la perturbation appliquée au moteur.

5. Dispositif de commande de vitesse pour un moteur rotatif selon la revendication 3, dans lequel ledit compensateur d'apprentissage (27) reçoit la vitesse de référence d'entrée et la position angulaire du moteur sous la forme d'adresses, et délivre la valeur de correction de perturbation mémorisée dans une position assignée par les adresses.

6. Procédé de commande de vitesse pour un moteur rotatif, le procédé de commande de vitesse comprenant les étapes consistant à :
(a) obtenir une erreur de vitesse par comparaison d'une vitesse de référence d'entrée à une vitesse réelle détectée à partir du moteur;
(b) recevoir l'erreur de vitesse et délivrer une commande de courant pour commander la vitesse de rotation du moteur;
(c) recevoir la vitesse de référence d'entrée, la commande de courant et la position angulaire et délivrer une valeur de correction de perturbation pour corriger un effet de la perturbation exprimée en fonction d'une position angulaire et d'une vitesse angulaire appliquées au moteur par l'intermédiaire de l'apprentissage répétitif;
(d) obtenir une commande de courant corrigée par addition de la commanda de courant et de la valeur de correction de perturbation;
(e) recevoir la commande de courant corrigée et délivrer une commande de couple au moteur; et
(f) détecter une vitesse de courant du moteur rotatif en fonction de la commande de couple, le procédé étant **caractérisé en ce que** le compensateur d'apprentissage délivre la valeur de correction de perturbation sur la base de l'expression suivante${\text{i*}}_{\text{LK}} {\text{(t) = i*}}_{\text{L(K-1)}} {\text{(t) +mZ}}_{\text{(K-1)}} \text{(t)}$ dans laquelle i*_{LK} est la valeur de correction de perturbation obtenue lors du K-ème apprentissage répétitif et devient le signal de sortie du compensateur d'apprentissage (27), i*_{L(K-1)} est la valeur de correction de perturbation obtenue lors du (K-1)-ème apprentissage répétitif, m est le gain d'apprentissage répétitif et M<1, Z_{(K-1)} est une valeur périodique de la commande de courant, qui est une fonction périodique délivrée par le dispositif de commande de vitesse dans le (K-1)-ème apprentissage répétitif.

7. Procédé de commande de vitesse pour un moteur rotatif selon la revendication 6, selon lequel ladite étape de compensation d'apprentissage (c) comprend les sous-étapes consistant à :
(c1) initialiser la durée d'apprentissage répétitif à zéro et la valeur de correction de perturbation à zéro au démarrage de l'apprentissage;
(c2) produire une commande de courant périodique en utilisant la commande de courant en rapport avec la perturbation qui est une fonction périodique exprimée uniquement en tant que position angulaire avec une vitesse angulaire constante si la commande de vitesse devient l'état normal, au moyen de l'étape (b);
(c3) mémoriser une période de la commande de courant périodique;
(c4) augmenter de un les durées d'apprentissage répétitif;
(c5) obtenir la valeur de correction de perturbation de courant conformément à l'apprentissage répétitif par addition d'une valeur périodique de la commande de courant périodique à la valeur de correction de perturbation obtenue lors de l'apprentissage répétitif précédent;
(c6) évaluer si la perturbation est suffisamment compensée par comparaison de la commande de courant lors de l'étape (b) à une valeur de seuil prédéterminée au moment de la correction de la puissance appliquée au moteur avec la valeur de correction de perturbation obtenue;
(c7) mémoriser la valeur de correction de perturbation s'il est -établi que la perturbation a été suffisamment compensée lors de la sous-étape (c6); et
(c8) si la perturbation n'a pas été suffisamment compensée lors de l'étape (c6), répéter l'apprentissage répétitif jusqu'à ce que la perturbation soit suffisamment compensée pour qu'on obtienne de ce fait la valeur de correction de perturbation.

8. Procédé de commande de vitesse pour un moteur rotatif selon la ravendication 7, dans lequel ladite étape de compensation d'apprentissage (c) corrige la perturbation en utilisant la valeur de correction de perturbation mémorisée.
